# EUROPÄISCHE PATENTSCHRIFT

(11) **EP 1 273 832 B1**
(45) Veröffentlichungstag und Bekanntmachung des Hinweises auf die Patenterteilung: **08.09.2004**
(21) Anmeldenummer: 01116191.6
(22) Anmeldetag: 04.07.2001
(51) Int. Cl.: F16H 61/24, F16H 61/18

(54) **Schaltvorrichtung für ein Kraftfahrzeuggetriebe und Verfahren zur Führung der Bewegung eines Schalthebels**
Shift device for motor vehicle and method of guiding a shift lever
Dispositif de changement de vitesses et méthode de guidage du mouvement d'un levier de vitesses

(43) Veröffentlichungstag der Anmeldung: 08.01.2003
(73) Patentinhaber: GETRAG FORD Transmissions GmbH, 50725 Köln (DE)
(72) Erfinder: Dörnenburg, Henning, 50733 Köln (DE); Bieber, Thomas, 50733 Köln (DE)
(74) Vertreter: Bonsmann, Manfred, Dipl.-Ing.

(56) Entgegenhaltungen:
- EP-A- 0 541 098
- EP-A- 0 599 206
- EP-A- 0 955 488
- US-A- 3 866 488

## Beschreibung

Die Erfindung betrifft eine Schaltvorrichtung für ein Kraftfahrzeuggetriebe, enthaltend einen Schalthebel, der in vorgegebene Schaltpositionen bewegt werden kann, sowie eine Widerstandseinrichtung zur Erzeugung einer positionsabhängigen Widerstandskraft gegen die Bewegung des Schalthebels.

Eine Schaltvorrichtung der eingangs genannten Art sind zum Beispiel aus der EP 0 955 488 A1 bekannt. Eine Schaltvorrichtung dient dazu, in einem manuellen Wechselgetriebe über die Bewegung eines Schalthebels durch den Fahrer unterschiedliche Gänge einzulegen. Der Schalthebel ist in der Regel in einem Drehpunkt drehbeweglich gelagert, wobei seine Bewegungsmöglichkeiten durch eine Kulissenführung derartig eingeschränkt sind, dass er nur auf vorgezeichneten Bahnen in vorgegebene Schaltpositionen bewegt werden kann. Die Schaltpositionen entsprechen dabei dem eingelegten ersten, zweiten, dritten etc. Vorwärtsgang sowie dem Rückwärtsgang R.

Zur Unterstützung der Auswahlbewegung eines Schalthebels in der Führungsbahn ist es bekannt, den Schalthebel direkt oder indirekt mit einer Widerstandseinrichtung zu koppeln. Die Widerstandseinrichtung belastet den Schalthebel mit einer von der Position des Schalthebels abhängigen Kraft, welche ihn in den vorgegebenen Schaltpositionen stabilisiert (Energieminima) und eine ungewollte Veränderung der Schaltposition verhindert. Insbesondere ist es bekannt, durch eine Widerstandseinrichtung ein für das Getriebe zerstörerisches sowie für den Fahrzustand gefährliches unbeabsichtigtes Schalten in den Rückwärtsgang zu verhindern, indem der Bewegung des Schalthebels aus der Neutralposition in die Rückwärtsgang-Position eine besonders hohe Widerstandskraft entgegengesetzt wird. Nachteilig hieran ist jedoch, dass die hohe Widerstandskraft ein unvorteilhaftes Schaltgefühl erzeugt und ihre Überwindung für schwächere Fahrer sogar ein Problem darstellen kann. Ferner wird bei einer schnellen Bewegung des Schalthebels aufgrund der Massenträgheit die Widerstandskraft verhältnismäßig leicht überwunden, so dass die Gefahr eines unbeabsichtigten Einlegens des Rückwärtsganges besteht.

Aus der EP 0 599 206 A1 ist ein manuelles Schaltgetriebe bekannt, bei welchem an der Schaltwelle ein hiervon abstehender Blockierungsvorsprung angeordnet ist. Bei einer translatorischen Bewegung der Schaltwelle in eine dem Rückwärtsgang entsprechende Position betätigt der Blockierungsvorsprung einen Stoßdämpferzylinder, welcher eine von der Geschwindigkeit der Schaltwelle abhängige Widerstandskraft ausübt. Dies soll ein versehentliches Einlegen des Rückwärtsganges verhindern, wenn bei hohen Fahrzeuggeschwindigkeiten eigentlich der fünfte/sechste Vorwärtsgang eingelegt werden soll.

Aus der US-A-3 866 488 ist eine Schaltvorrichtung bekannt mit den Merkmalen des Oberbegriffs des Anspruchs 1.

Vor diesem Hintergrund war es Aufgabe der vorliegenden Erfindung, eine Schaltvorrichtung sowie ein Verfahren zur Führung eines Schalthebels bereitzustellen, welche ein komfortables Schalten und gleichzeitig eine hohe Sicherheit gegen ein unbeabsichtigtes Einlegen eines falschen Ganges gewährleisten.

Diese Aufgabe wird durch eine Schaltvorrichtung mit den Merkmalen des Anspruchs 1 gelöst. Vorteilhafte Ausgestaltungen sind in den Unteransprüchen enthalten.

Die erfindungsgemäße Schaltvorrichtung für ein Kraftfahrzeugwechselgetriebe enthält einen Schalthebel, welcher vom Fahrer gemäß einer Führung wie etwa einer Kulissenführung in vorgegebene Schaltpositionen entsprechend den einzulegenden Gängen bewegt werden kann. Ferner enthält die Schaltvorrichtung eine Widerstandseinrichtung, mit welcher eine von der Position des Schalthebels abhängige Widerstandskraft gegen die Bewegung des Schalthebels zwischen den Schaltpositionen erzeugt wird. Die Widerstandseinrichtung ist dadurch gekennzeichnet, dass diese eine Widerstandskraft erzeugt, welche nicht nur von der Position des Schalthebels, sondern auch von der Bewegungsgeschwindigkeit des Schalthebels abhängt.

Durch die geschwindigkeitsabhängige Widerstandskraft gegen die Bewegung des Schalthebels ist es möglich, dynamischen Effekten bei einem Schaltvorgang Rechnung zu tragen. Insbesondere kann dabei die Widerstandseinrichtung so ausgestaltet sein, dass die von ihr erzeugte Widerstandskraft mit zunehmender Bewegungsgeschwindigkeit des Schalthebels zunimmt. Einer schnellen Bewegung des Schalthebels wird somit ein größerer Widerstand entgegengesetzt als einer langsamen, "quasistatischen" Bewegung. Dies erlaubt es, die Wirkungen der Massenträgheit des Schaltsystems auszugleichen. Eine schnelle Bewegung des Schalthebels hat daher nicht mehr zur Folge, dass Widerstände gegen die Bewegung leichter überwunden werden könnten, da die Widerstandseinrichtung bei einer schnellen Bewegung mit entsprechend höheren Widerstandskräften reagiert. Das Anwachsen dieser Widerstandskräfte mit der Bewegungsgeschwindigkeit des Schalthebels kann dabei insbesondere derart ausgelegt werden, dass die Massenträgheitseffekte überkompensiert werden, so dass eine schnelle Bewegung des Schalthebels in der Summe gesehen (unter Berücksichtigung von erzeugter Widerstandskraft und Massenträgheitseffekten) schwieriger durchzuführen ist als eine langsame Bewegung. Dieser Effekt kann insbesondere in Verbindung mit dem Einlegen des Rückwärtsganges ausgenutzt werden, um eine sichere Rückwärtsgangsperre zu verwirklichen, die auch beziehungsweise gerade bei einer schnellen Bewegung des Schalthebels wirksam bleibt.

Die Widerstandseinrichtung kann unmittelbar auf den Schalthebel einwirken. Es ist jedoch auch möglich, dass die Widerstandseinrichtung auf andere Elemente der Schaltvorrichtung einwirkt, welche über eine kinematische Kopplung mit dem Schalthebel verbunden sind. Insbesondere kann die Schaltvorrichtung eine Schaltwelle enthalten, mit welcher der Schalthebel derart gekoppelt ist, dass dieser die Schaltwelle translatorisch in Richtung ihrer Achse verschieben kann, wobei diese translatorische Bewegung in der Regel einer Bewegung des Schalthebels entlang der Neutralgasse zur Auswahl der Schaltgasse entspricht. Bei einer solchen Schaltvorrichtung wird die Widerstandseinrichtung vorzugsweise mit der Schaltwelle derart gekoppelt, dass eine Widerstandskraft gegen die translatorische Bewegung erzeugt wird. Eine solche Widerstandseinrichtung lässt sich einerseits verhältnismäßig einfach realisieren, andererseits stellt sie sicher, dass die Widerstandskraft nur gegen eine der Bewegungskomponenten des Schalthebels, vorzugsweise gegen die Auswahl der Schaltgasse, aufgebracht wird.

Für die technische Realisierung der Widerstandseinrichtung sind verschiedene Ausgestaltungen denkbar. Vorzugsweise wird die Widerstandseinrichtung durch einen Verdrängungsmechanismus realisiert, bei welchem ein Verdrängungskörper in einem Hohlkörper beweglich gelagert ist. Der Verdrängungskörper oder der Hohlkörper ist mit dem Schalthebel mittelbar oder unmittelbar gekoppelt, so dass der Verdrängungskörper im Hohlkörper je nach seiner Position ein unterschiedlich großes Volumen einschließt. Der Hohlkörper ist ferner mit einem Fluid (Flüssigkeit oder Gas) gefüllt, welches zum Beispiel Luft oder Öl sein kann, und weist einen Auslass für bei einer Einwärtsbewegung des Verdrängungskörpers verdrängtes Fluid sowie einen Einlass für bei einer Auswärtsbewegung des Verdrängungskörpers angesaugtes Fluid auf. Bei Einlass und Auslass kann es sich auch um dieselbe Öffnung handeln. Eine in der beschriebenen Weise ausgestaltete Widerstandseinrichtung erzielt ihre Wirkung unter Ausnutzung hydrodynamischer Effekte, gemäß derer eine langsame Strömung eines Fluides durch eine (kleine) Öffnung einem geringeren Reibungswiderstand begegnet als eine schnelle Strömung.

Gemäß einer Weiterbildung der Widerstandseinrichtung ist im Auslass und/oder im Einlass des Hohlkörpers ein Ventil angeordnet. Das Ventil bewirkt, dass die Strömung des Fluides durch die Öffnung jeweils nur in eine vorgegebene Richtung möglich ist. Auf diese Weise ist es möglich, das Ein- beziehungsweise Ausströmen des Fluides durch unterschiedliche Öffnungen (oder Öffnungskombinationen) erfolgen zu lassen, so dass der Bewegung des Schalthebels je nach Bewegungsrichtung unterschiedlich große geschwindigkeitsabhängige Widerstandskräfte entgegengesetzt werden können. Dies ist wiederum bei der Verwirklichung einer Rückwärtsgangsperre von Vorteil, da dort nur das Einlegen des Rückwärtsganges durch eine hohe Widerstandskraft gesichert werden muss, während das Verlassen des Rückwärtsganges keinen besonderen Anforderungen unterliegt.

Darüber hinaus kann das Ventil speziell als druckabhängiges Ventil ausgestaltet sein, d.h. erst oberhalb einer einstellbaren Druckschwelle schließen. Bei einer schnellen Bewegung des Verdrängungskörpers kommt es im Hohlkörper zu einem entsprechend hohen Druckanstieg des Fluides, welcher zum Schließen eines derartigen Druckventils führen kann. Die Strömung des Fluides wird dadurch vollständig unterbrochen und die weitere Bewegung des Schalthebels daher blockiert.

In einer Ausführungsform, bei der der Schalthebel an den Verdrängungskörper gekoppelt ist, erfolgt die Kopplung vorzugsweise dadurch, dass der Schalthebel mit einer Gleitkulisse versehen ist, welche mit dem Verdrängungskörper in Gleitkontakt steht, so dass die Kulisse diesen bei einer Bewegung des Schalthebels je nach Position des Schalthebels unterschiedlich weit in den Hohlkörper hinein schiebt oder den Verdrängungskörper aus dem Hohlkörper heraustreten lässt. Über die Kurvenform der Gleitkulisse kann somit die Größe der vom Verdrängungskörper erzeugten Widerstandskraft festgelegt werden. Insbesondere kann die Gleitkulisse Extrema (Minima oder Maxima) aufweisen, welche den vorgegebenen Schaltpositionen der einzelnen Gänge entsprechen und welche die in den Schaltpositionen angenommene Stellung des Schalthebels jeweils stabilisieren.

Zur Erzeugung einer positionsabhängigen Widerstandskraft ist der Schalthebel in der Regel mit einem elastischen Element gekoppelt. In einer besonders raumsparenden Kombination der positionsabhängigen Kraft mit der geschwindigkeitsabhängigen Kraft kann dabei eine Feder in dem vorstehend beschriebenen Hohlkörper angeordnet sein, welche mit dem Verdrängungskörper gekoppelt ist und dessen Bewegung mit einer elastischen Kraft beaufschlagt.

Gemäß einer anderen Ausgestaltung der Widerstandseinrichtung weist diese eine kompressible Masse auf, welche sich bei einer Stauchung hoher Geschwindigkeit verhärtet. Einer schnellen Bewegung des Schalthebels, die entsprechend zu einer schnellen Stauchung der Masse führt, wird daher eine größere Widerstandskraft entgegengesetzt, als einer langsamen, "quasistatischen" Stauchung.

Die Erfindung betrifft ferner ein Verfahren zur Führung der Bewegung eines Schalthebels für das Getriebe eines Kraftfahrzeugs, wobei die Führung zumindest unter anderem mittels einer von der Position des Schalthebels abhängigen Widerstandskraft gegen die Bewegung des Schalthebels erfolgt. Das Verfahren ist dadurch gekennzeichnet, dass die Widerstandskraft zusätzlich auch von der Bewegungsgeschwindigkeit des Schalthebels abhängt. Mit einem derartigen Verfahren ist es möglich, dynamische Effekte wie etwa eine Massenträgheit bei Schaltvorgängen zu berücksichtigen, wobei diese kompensiert oder zur Erzielung bestimmter Wirkungen auch überkompensiert werden können.

Insbesondere kann bei dem Verfahren bei einer schnellen Bewegung des Schalthebels eine größere Widerstandskraft erzeugt werden als bei einer langsamen Bewegung. Die bei einer bestimmten Bewegung je nach Durchführungsgeschwindigkeit maximale Widerstandskraft kann dabei etwa zwei- bis zehnmal größer sein als die entsprechende minimale Widerstandskraft. Gegen eine schnelle Bewegung des Schalthebels kann somit faktisch eine Sperre erzeugt werden, welche insbesondere zur Verhinderung eines unbeabsichtigten Einlegens des Rückwärtsganges dienen kann.

Im Folgenden wird die Erfindung anhand der schematischen Zeichnungen beispielhaft näher erläutert. Es zeigen:
- Fig. 1: Diagramme zur Veranschaulichung der Widerstandskräfte gegen die Bewegung eines Schalthebels bei einer erfindungsgemäßen Schaltvorrichtung;
- Fig. 2: eine erste Ausgestaltung einer mit einem Schalthebel gekoppelten Widerstandseinrichtung;
- Fig. 3: eine zweite Ausgestaltung einer mit einem Schalthebel gekoppelten Widerstandseinrichtung;
- Fig. 4: eine erste Ausgestaltung einer mit einer Schaltwelle gekoppelten Widerstandseinrichtung;
- Fig. 5: eine zweite Ausgestaltung einer mit einer Schaltwelle gekoppelten Widerstandseinrichtung;
- Fig. 6: eine mit einem Schalthebel gekoppelte widerstandseinrichtung mit einer kompressiblen Masse; und
- Fig. 7: eine mit einer Schaltwelle gekoppelte Widerstandseinrichtung mit einer kompressiblen Masse.

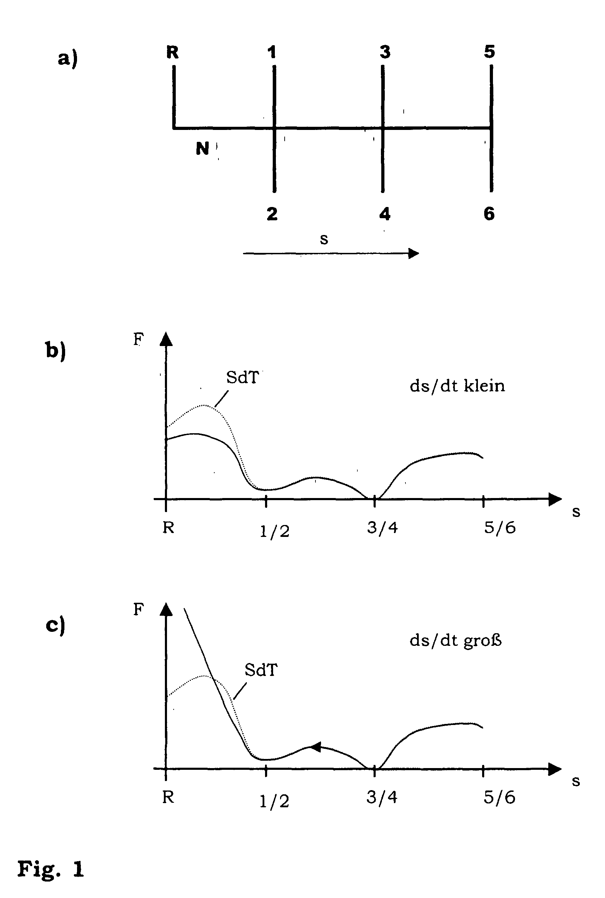

Im oberen Teil von Figur 1 ist in einer Aufsicht eine typische Führungsbahn für die Bewegung eines Schalthebels (nicht dargestellt) des Wechselgetriebes eines Kraftfahrzeugs dargestellt. Ausgehend von einer in der Figur horizontal verlaufenden Neutralgasse N sind über drei senkrechte Schaltgassen die Vorwärtsgänge "1" und "2", "3" und "4" sowie "5" und "6" zu erreichen. Ferner ist oberhalb des linken Endes der Neutralgasse N die Schaltposition des Rückwärtsganges "R" angeordnet.

Bei der Bewegung des Schalthebels entlang der beschriebenen Führungsbahn ist insbesondere darauf zu achten, dass die anzunehmenden Schaltpositionen stabilisiert werden. Zu diesem Zweck wird der Bewegung des Schalthebels zwischen den Schaltpositionen eine Widerstandskraft entgegengesetzt, so dass sich der Schalthebel in den Schaltpositionen jeweils in einem stabilen Gleichgewicht (Energieminimum) befindet. Die Größe der Widerstandskraft gegen die Bewegung des Schalthebels ist für eine Schaltvorrichtung nach dem Stand der Technik schematisch durch die gestrichelte Linie in dew Diagramm b) und c) von Figur 1 dargestellt. Dabei ist auf der horizontalen Achse die Position des Schalthebels entlang der Neutralgasse N und auf der vertikalen Achse die in der entsprechenden Position s erzeugte Widerstandskraft F aufgetragen. Wie aus dieser Darstellung hervorgeht, wird zwischen der Position des ersten beziehungsweise zweiten Ganges ("1/2") und dem Rückwärtsgang "R" gemäß dem Stand der Technik eine besonders hohe Widerstandskraft von typischerweise 80 N erzeugt. Diese hohe Widerstandskraft dient dazu, eine Rückwärtsgangsperre gegen ein unbeabsichtigtes Einlegen des Rückwärtsganges zu errichten.

Nachteilig bei der Krafterzeugung gemäß dem Stand der Technik ist, dass die hohe Widerstandskraft bei langsamen beziehungsweise normalen Schaltvorgängen nur unter entsprechender Anstrengung überwunden werden kann, während bei einer schnellen Bewegung des Schalthebels aufgrund von Massenträgheitseffekten eine verhältnismäßig einfache Überwindung möglich ist. Daher besteht in diesen Fällen die Gefahr eines unbeabsichtigten Einlegens des Rückwärtsganges.

Um die geschilderten Probleme zu vermeiden, wird erfindungsgemäß vorgeschlagen, die erzeugte Widerstandskraft gegen die Bewegung des Schalthebels nicht nur von der Position s des Schalthebels, sondern auch von der Geschwindigkeit ds/dt abhängen zu lassen. Die Kräfteverhältnisse bei einer langsamen Bewegung des Schalthebels sind dabei durch die durchgezogene Kurve im Diagramm b) von Figur 1 dargestellt. Die Widerstandskraft gegen ein Einlegen des Rückwärtsganges ist gegenüber dem Stand der Technik deutlich herabgesetzt, was ohne Sicherheitseinbußen möglich ist, da ein langsames, "quasistatisches" Einlegen des Ganges in der Regel kontrolliert und absichtsvoll erfolgt. Ferner kann bei einem langsamen Einlegen des Ganges auf eine eventuelle falsche Wahl der Schaltgasse häufig noch rechtzeitig seitens des Fahrers reagiert werden.

Das Diagramm c) gemäß Figur 1 zeigt dagegen in der durchgezogenen Kurve die Kräfte bei einer schnellen Bewegung des Schalthebels. Die Widerstandskräfte nehmen hierbei erheblich zu, so dass es faktisch zu einem Blockieren des Einlegens des Rückwärtsganges kommt. Der dargestellte Kurvenverlauf gilt dabei für das Einlegen des Rückwärtsganges. Bei der Bewegung in Gegenrichtung kann dagegen eine erheblich geringere Kraft, z.B. wie in Diagramm b) dargestellt, erzeugt werden.

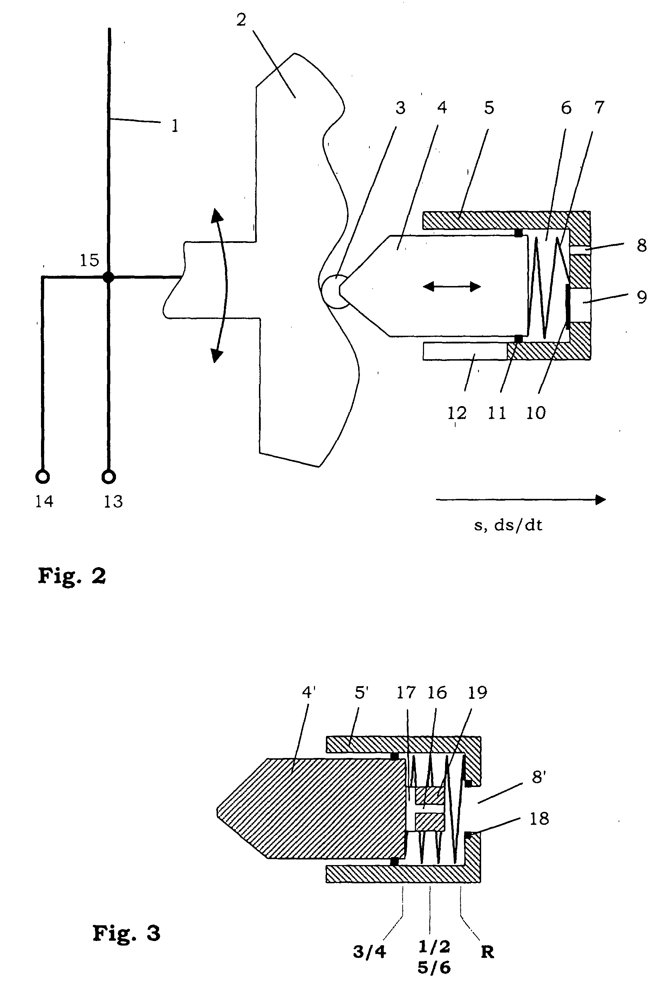

In Figur 2 ist ein erster möglicher Mechanismus für eine Widerstandseinrichtung zur Erzeugung einer geschwindigkeitsabhängigen Widerstandskraft auf einen Schalthebel 1 dargestellt. Der schematisch dargestellte Schalthebel 1 ist um einen Drehpunkt 15 drehbar und an einem ersten Ende 13 mit einem Anschluss für ein Schaltkabel sowie an einem zweiten Ende 14 mit einem Anschluss für ein Wählkabel versehen. Ferner weist er an einem weiteren Ende eine Gleitkulisse 2 auf, welche bei einer Bewegung des Schalthebels die durch den gekrümmten Doppelpfeil angedeutete Schwenkbewegung ausführt. An der Gleitkulisse 2 liegt eine Abtastrolle 3 an, welche mit der Spitze eines Verdrängungskörpers 4 verbunden ist. Bei einer Schwenkbewegung der Gleitkulisse 2 wird der Verdrängungskörper 4 entsprechend dem Formverlauf der Gleitkulisse 2 verschieden stark nach rechts oder links bewegt (gerader Doppelpfeil). Der Verdrängungskörper 4 steht dabei unter der Wirkung der nach links gerichteten Kraft einer Feder 7, welche dafür sorgt, dass der Verdrängungskörper 4 über die Rolle 3 in ständigem Kontakt zur Gleitkulisse 2 bleibt.

Der Verdrängungskörper 4 ist in einem Hohlkörper 5 geführt. Durch Kolbenringe 11 abgedichtet begrenzt er dort ein Innenvolumen 6. Der Verdrängungskörper 4 verhält sich somit ähnlich wie ein Kolben in einem Zylinder.

Durch die entlang des geraden Doppelpfeils stattfindende Bewegung des Verdrängungskörpers 4 wird das eingeschlossene Volumen 6 im Hohlkörper 5 verändert. Insbesondere wird das Volumen 6 bei einem Eindringen des Verdrängungskörpers 4 in den Hohlkörper 5 (d.h. einer Bewegung nach rechts) verkleinert. Die im Volumen 6 befindliche Luft wird daher durch den im Boden des Hohlkörpers 5 ausgebildeten Auslass 8 verdrängt. Das Ausströmen der verdrängten Luft durch den Auslass 8 erzeugt eine Reibungskraft, welche aufgrund der Strömungsverhältnisse um so größer ist, je schneller das Ausströmen erfolgt. Näherungsweise ist die Widerstandskraft F proportional der Bewegungsgeschwindigkeit des Verdrängungskörpers 4, F = kds/dt. Einer schnellen Bewegung des Verdrängungskörpers 4 nach rechts wird daher eine größere Widerstandskraft entgegengesetzt als einer langsamen Bewegung.

Wenn sich der Verdrängungskörper 4 nach links bewegt und hierdurch das eingeschlossene Volumen 6 im Hohlkörper 5 vergrößert, wird Luft in den Hohlkörper eingesaugt. Diese Luft kann durch den Auslass 8 eintreten. Ferner kann angesaugte Luft auch durch die größere Einlassöffnung 9 eintreten, welche an der zum Inneren des Hohlkörpers 5 gelegenen Seite durch einen als Ventil wirkenden Deckel 10 abgedeckt ist. Der Deckel 10 erlaubt durch den Einlass 9 nur den Eintritt von Luft, nicht dagegen das Ausströmen.

Im Ergebnis steht somit für das Einströmen von Luft in den Hohlkörper 5 eine erheblich größere Öffnung (Auslass 8 plus Einlass 9) zur Verfügung als für das Ausströmen. Eine nach links gerichtete Bewegung des Verdrängungskörpers 4 unterliegt daher einer wesentlich kleineren Widerstandskraft als eine nach rechts gerichtete Bewegung. Dieser Effekt kann vorteilhaft dazu ausgenutzt werden, nur das Einlegen des Rückwärtsganges zu erschweren, nicht jedoch das Verlassen des Rückwärtsgangs.

Wie aus Figur 2 ferner erkennbar, ist in der Seitenwand des Hohlkörpers 5 eine weitere Öffnung 12 ausgebildet, welche je nach Eindringtiefe des Verdrängungskörpers 4 in den Hohlkörper 5 in unterschiedlichem Ausmaß verschlossen wird. Diese Öffnung hat somit die Wirkung, dass je nach Position des Verdrängungskörpers 4 beziehungsweise Schalthebels 1 unterschiedlich große Öffnungen für den Ein- beziehungsweise Austritt von Luft zur Verfügung stehen. Insbesondere kann bei weit ausgezogenem Verdrängungskörper 4 eine so große Öffnung entstehen, dass quasi nur vernachlässigbare Reibungskräfte auftreten.

In Figur 3 ist eine Variante der Widerstandseinrichtung von Figur 2 dargestellt. Der Verdrängungskörper 4' ist dabei wiederum in einem Hohlkörper 5' geführt und durch Kolbenringe abgedichtet sowie durch eine Feder nach außen vorgespannt. Der Boden des Verdrängungskörpers 4' weist einen Fortsatz 19 auf, dessen Durchmesser dem Durchmesser des Ein-/Auslasses 8' am Boden des Hohlkörpers 5' entspricht. Am Rand des Ein-/Auslasses 8' sind Dichtungen 18 mit Überströmkanälen ausgebildet. Der Fortsatz 19 kann bei einem entsprechend tiefen Eindringen des Verdrängungskörpers 4' in den Hohlkörper 5' in den Ein-/Auslass 8' eindringen und diesen verschließen. Ein weiteres Eindringen des Verdrängungskörpers 4' in den Hohlkörper 5' führt dann dazu, dass verdrängtes Fluid durch die in dem Fortsatz 19 ausgebildeten Kanäle 16 und 17 strömen muss, was zu einem entsprechend hohen Strömungswiderstand führt. Der Kanal 16 kann insbesondere auch als verengte Drossel ausgebildet sein. Am unteren Rand von Figur 3 sind die Positionen des Kanals 17 eingetragen, die dieser in den Gängen 3/4 (dargestellte Position), 1/2 bzw. 5/6 sowie R annimmt.

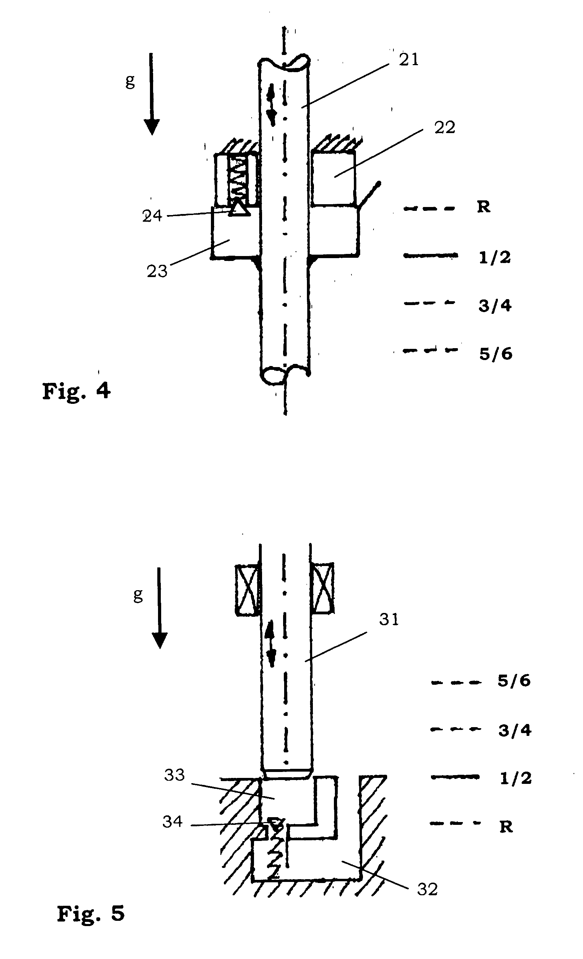

Figur 4 zeigt eine Variante der Widerstandseinrichtung, welche an der Schaltwelle 21 einer Schaltvorrichtung ansetzt. Die Schaltwelle 21 ist kinematisch mit einem Schalthebel gekoppelt (nicht dargestellt) und kann von diesem translatorisch entlang ihrer Achse verschoben werden (Doppelpfeil), um die einzulegende Schaltgasse auszuwählen. Am rechten Rand von Figur 4 sind die Positionen der Schaltwelle 21 in den Ganggassen 5/6, 3/4, 1/2 (dargestellte Position) sowie R eingezeichnet. Der Vektor g der Erdbeschleunigung zeigt an, dass die R-Gasse in Bezug auf die senkrechte Schaltwelle 21 oben liegt.

Die Schaltwelle 21 ist von einem ortsfesten, ringförmigen Verdrängungskörper 22 umgeben, in dem ein Ein-/Auslass ausgebildet ist. Mit der Schaltwelle 21 ist ein Ringzylinder fest verbunden, welcher einen ringförmigen Hohlraum 23 begrenzt. Wenn die Schaltwelle 21 die dargestellte Position in der Ganggasse "1/2" annimmt, beginnt der Verdrängungskörper 22 gerade, in den Hohlraum 23 einzudringen. Im Hohlraum 23 enthaltenes Öl kann daher bei einer weiteren Aufwärtsbewegung der Schaltwelle 21 und des Ringzylinders nur noch durch den Ein-/Auslass ausströmen.

Vor dem Ein-/Auslass ist auf der dem Hohlraum 23 zugewandten Seite ein Druckventil 24 angeordnet. Bei einer schnellen Auswahlbewegung der R-Gasse steigt der Druck im Hohlraum 23 stärker an als bei einer langsamen Bewegung. Überschreitet der Druck eine vorgegebene Grenze, so schließt das Druckventil 24, und die weitere Aufwärtsbewegung der Schaltwelle 21 wird blockiert. Ein zu schnelles Einlegen des Rückwärtsganges wird dadurch verhindert.

In Figur 5 ist eine Abwandlung der Widerstandseinrichtung von Figur 4 dargestellt, welche bei einer unten liegenden R-Gasse zur Anwendung kommen kann. Hierbei bildet das Ende der Schaltwelle 31 selbst den Verdrängungskörper, welchen bei einer Bewegung der Schaltwelle 31 von der 1/2-Gase zur R-Gasse in einen ortsfesten Hohlraum 33 eindringt. Am Boden des Hohlraums 33 befindet sich wiederum ein Druckventil 34, welches bei einem zu raschen Eindringen der Schaltwelle 31 schließt und dadurch das Ausströmen des im Hohlraum 33 enthaltenen Öls durch den Auslasskanal 32 verhindert. Ein zu schnelles Einlegen des Rückwärtsganges wird dadurch blokkiert.

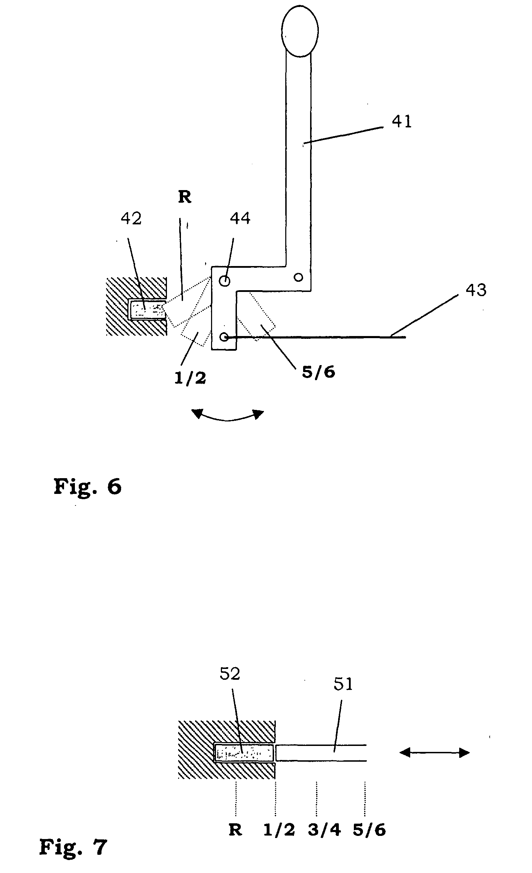

In Figur 6 ist eine weitere alternative Ausgestaltung der Widerstandseinrichtung dargestellt. Der Schalthebel 41 ist um einen Drehpunkt 44 drehbar gelagert und unter anderem an einem Ende mit einem Wählkabel 43 verbunden. Gestrichelt sind die Positionen des Endes des Schalthebels 41 dargestellt, die dieser in den verschiedenen Schaltgassen annimmt. Dabei ist erkennbar, dass der Schalthebel 41 in der der R-Gasse entsprechenden Position an einen kompressiblen Dämpfungsblock 42 der Widerstandseinrichtung anstößt. Das Einlegen der Rückwärtsganges erfordert daher das Stauchen des Dämpfungsblocks 42. Der Dämpfungsblock 42 ist dabei so ausgestaltet bzw. aus einem solchen Material, dass er bei schneller Stauchung verhärtet und den Rückwärtsgang blokkiert. Als Dämpfungsmaterial kommt z.B. Schaummaterial in Frage, wie es z.B. bei Motorradschutzkleidung eingesetzt wird.

Figur 7 zeigt die Realisierung desselben Prinzips bei einer inneren Schaltung. Hierbei stößt eine Schaltwelle 51 bei ihrer translatorischen Bewegung von der "1/2"-Schaltgasse zur R-Gasse an eine kompressible Masse 52 an, welche sich wiederum bei schneller Stauchung verhärtet und den Rückwärtsgang dadurch blockiert.

## Patentansprüche

1. Schaltvorrichtung für ein Kraftfahrzeuggetriebe, enthaltend einen Schalthebel (1, 41), der in vorgegebene Schaltpositionen bewegt werden kann, sowie eine Widerstandseinrichtung zur Erzeugung einer positionsabhängigen Widerstandskraft gegen die Bewegung des Schalthebels in allen Gängen, **dadurch gekennzeichnet, dass** die Widerstandseinrichtung so eingerichtet ist, dass die erzeugte Widerstandskraft auch von der Bewegungsgeschwindigkeit des Schalthebels (1, 41) abhängig ist, und dass die Widerstandskraft bei einem schnellen Einlegen des Rückwärtsganges bis zur Blockierung zunimmt.

2. Schaltvorrichtung nach Anspruch 1, **dadurch gekennzeichnet, dass** die Widerstandseinrichtung derart eingerichtet ist, dass die Widerstandskraft mit zunehmender Bewegungsgeschwindigkeit des Schalthebels (1, 41) zunimmt.

3. Schaltvorrichtung nach einem der Ansprüche 1 oder 2, **dadurch gekennzeichnet, dass** der Schalthebel mit einer Schaltwelle (21, 31, 51) derart gekoppelt ist, dass dieser die Schaltwelle translatorisch in Richtung ihrer Achse verschieben kann, und dass die Widerstandseinrichtung mit der Schaltwelle derart gekoppelt ist, dass die Widerstandseinrichtung eine Widerstandskraft gegen die genannte translatorische Bewegung erzeugt.

4. Schaltvorrichtung nach einem der Ansprüche 1 bis 3, **dadurch gekennzeichnet, dass** die Widerstandseinrichtung einen Verdrängungskörper (4, 4', 22, 31) aufweist, welcher in einem Hohlkörper (5, 5') relativ zu diesem beweglich gelagert ist und darin je nach Position ein unterschiedliches Volumen (6, 23, 33) einschließt, wobei der Hohlkörper mit einem Fluid gefüllt ist und wobei im Hohlkörper und/oder im Verdrängungskörper ein Auslass (8, 8', 16, 17) für verdrängtes Fluid sowie, ein Einlass (8, 8', 9, 16, 17) für angesaugtes Fluid angeordnet ist.

5. Schaltvorrichtung nach Anspruch 4, **dadurch gekennzeichnet, dass** im Auslass und/oder im Einlass (9) ein Ventil (10, 24, 34) angeordnet ist, welches vorzugsweise druckabhängig schließt.

6. Schaltvorrichtung nach Anspruch 4 oder 5, **dadurch gekennzeichnet, dass** der Schalthebel (1) eine Gleitkulisse (2) aufweist, welche mit dem Verdrängungskörper (4) in Gleitkontakt steht und diesen bei einer Bewegung des Schalthebels unterschiedlich tief im Hohlkörper (5) positioniert.

7. Schaltvorrichtung nach einem der Ansprüche 4 bis 6, **dadurch gekennzeichnet, dass** der Verdrängungskörper (4, 4') mit einer im Hohlkörper (5, 5') angeordneten Feder (7) gekoppelt ist, welche eine den Verdrängungskörper gegen den Schalthebel (1) drückende Kraft ausübt.

8. Schaltvorrichtung nach einem der Ansprüche 1 bis 7, **dadurch gekennzeichnet, dass** die Widerstandseinrichtung eine kompressible Masse (42, 52) enthält, welche sich bei einer Stauchung mit hoher Geschwindigkeit verhär-, tet.

## Claims

1. Shift device for a motor vehicle transmission, containing a shift lever (1, 41) which can be moved into predetermined shift positions, and a resistance arrangement for generating a position-dependent resistance force counter to the movement of the shift lever in all gears, **characterized in that** the resistance arrangement is designed in such a way that the generated resistance force is also dependent on the speed of movement of the shift lever (1, 41), and **in that**, in the event of a rapid selection of reverse gear, the resistance force increases up to blockage.

2. Shift device according to Claim 1, **characterized in that** the resistance arrangement is designed in such a way that the resistance force increases with an increasing speed of movement of the shift lever (1, 41).

3. Shift device according to either one of Claims 1 and 2, **characterized in that** the shift lever is coupled to a shift shaft (21, 31, 51) in such a way that the said shift lever can displace the shift shaft in translational motion in the direction of the axis of the latter, and **in that** the resistance arrangement is coupled to the shift shaft in such a way that the resistance arrangement generates a resistance force counter to the said translational motion.

4. Shift device according to one of Claims 1 to 3, **characterized in that** the resistance arrangement has a displacement body (4, 4', 22, 31) which is mounted in a hollow body (5, 5') moveably in relation to the latter and, depending on position, encloses a different volume (6, 23, 33) in the said hollow body, the hollow body being filled with a fluid, and an outlet (8, 8', 16, 17) for displaced fluid and an inlet (8, 8', 9, 16, 17) for sucked-in fluid being arranged in the hollow body and/or in the displacement body.

5. Shift device according to Claim 4, **characterized in that** a valve (10, 24, 34), which closes preferably in a pressure-dependent manner, is arranged in the outlet and/or in the inlet (9).

6. Shift device according to Claim 4 or 5, **characterized in that** the shift lever (1) has a sliding block (2) which is in sliding contact with the displacement body (4) and which positions the latter at a different depth in the hollow body (5) during a movement of the shift lever.

7. Shift device according to one of Claims 4 to 6, **characterized in that** the displacement body (4, 4') is coupled to a spring (7) which is arranged in the hollow body (5, 5') and which exerts a force pressing the displacement body against the shift lever (1).

8. Shift device according to one of Claims 1 to 7, **characterized in that** the resistance arrangement contains a compressible mass (42, 52) which hardens at high speed in the event of compression.

## Revendications

1. Dispositif de changement de vitesses pour véhicule automobile contenant un levier de vitesses (1, 41) qui peut être mû dans des positions d'enclenchement prédéfinies, ainsi qu'un dispositif de résistance pour générer une force de résistance opposée au mouvement du levier de vitesses en fonction de sa position, **caractérisé en ce que** le dispositif de résistance est conçu de telle sorte que la force de résistance générée dépend aussi de la vitesse de déplacement du levier de vitesses (1, 41), et que la force de résistance augmente jusqu'au blocage en cas d'enclenchement rapide de la marche arrière.

2. Dispositif de changement de vitesses selon la revendication 1, **caractérisé en ce que** le dispositif de résistance est conçu de telle sorte que la force de résistance augmente lorsque la vitesse de déplacement du levier de vitesses (1, 41) augmente.

3. Dispositif de changement de vitesses selon la revendication 1 ou 2, **caractérisé en ce que** le levier de vitesses est couplé avec un arbre de levier de vitesses (21, 31, 51) de telle sorte qu'il peut faire coulisser l'arbre de levier de vitesses par un mouvement de translation dans la direction de son axe, et que le dispositif de résistance est couplé avec l'arbre de levier de vitesses de telle sorte que le dispositif de résistance génère une force de résistance opposée audit mouvement de translation.

4. Dispositif de changement de vitesses selon une quelconque des revendications 1 à 3, **caractérisé en ce que** le dispositif de résistance présente un corps de refoulement (4, 4', 22, 31) qui est monté dans un corps creux (5, 5') de manière mobile par rapport à celui-ci et délimite dans celui-ci un volume (6, 23, 33) variable selon sa position, le corps creux étant rempli avec un fluide et une évacuation (8, 8', 16, 17) étant disposée dans le corps creux et/ou dans le corps de refoulement pour le fluide refoulé ainsi qu'une admission (8, 8', 9, 16, 17) pour le fluide aspiré.

5. Dispositif de changement de vitesses selon la revendication 4, **caractérisé en ce que** dans l'évacuation et/ou dans l'admission (9) est disposée une soupape (10, 24, 34) qui se ferme de préférence en fonction de la pression.

6. Dispositif de changement de vitesses selon la revendication 4 ou 5, **caractérisé en ce que** le levier de vitesses (1) présente une coulisse (2) qui est en contact coulissant avec le corps de refoulement (4) et positionne celui-ci plus ou moins profondément dans le corps creux (5) lors d'un mouvement du levier de vitesses.

7. Dispositif de changement de vitesses selon une quelconque des revendications 4 à 6, **caractérisé en ce que** le corps de refoulement (4, 4') est couplé avec un ressort (7) disposé dans le corps creux (5, 5'), qui exerce une force appliquant le corps de refoulement contre le levier de vitesses (1).

8. Dispositif de changement de vitesses selon une quelconque des revendications 1 à 7, **caractérisé en ce que** le dispositif de résistance contient une masse compressible (42, 52) qui durcit si elle est écrasée avec une grande vitesse.
